# EUROPEAN PATENT SPECIFICATION

(11) **EP 3 657 829 B1**
(45) Date of publication and mention of the grant of the patent: **30.07.2025**
(21) Application number: 19208653.6
(22) Date of filing: 12.11.2019
(51) Int. Cl.: H04L 67/12, H04W 4/90, H04W 76/50

(54) **VEHICLE, COMMUNICATION CONTROL METHOD FOR VEHICLE, IN-VEHICLE COMMUNICATION DEVICE, COMMUNICATION CONTROL METHOD FOR IN-VEHICLE COMMUNICATION DEVICE, SERVER APPARATUS, COMMUNICATION CONTROL METHOD FOR SERVER APPARATUS, AND NON-TRANSITORY STORAGE MEDIUM STORING PROGRAM**
FAHRZEUG, KOMMUNIKATIONSSTEUERUNGSVERFAHREN FÜR EIN FAHRZEUG, FAHRZEUGINTERNE KOMMUNIKATIONSVORRICHTUNG, KOMMUNIKATIONSSTEUERUNGSVERFAHREN FÜR EINE FAHRZEUGINTERNE KOMMUNIKATIONSVORRICHTUNG, SERVERVORRICHTUNG, KOMMUNIKATIONSSTEUERUNGSVERFAHREN FÜR EINE SERVERVORRICHTUNG UND NICHTTRANSITORISCHES SPEICHERMEDIUM MIT DARAUF GESPEICHERTEM PROGRAMM
VÉHICULE, PROCÉDÉ DE COMMANDE DE COMMUNICATION POUR VÉHICULE, DISPOSITIF DE COMMUNICATION EMBARQUÉ, PROCÉDÉ DE COMMANDE DE COMMUNICATION POUR DISPOSITIF DE COMMUNICATION EMBARQUÉ, APPAREIL DE SERVEUR, PROCÉDÉ DE COMMANDE DE COMMUNICATION POUR APPAREIL DE SERVEUR ET SUPPORT D'INFORMATIONS NON TRANSITOIRE MÉMORISANT UN PROGRAMME

(30) Priority: 21.11.2018 JP 2018218289
(43) Date of publication of application: 27.05.2020
(73) Proprietor: TOYOTA JIDOSHA KABUSHIKI KAISHA, Toyota-shi, Aichi-ken, 471-8571 (JP)
(72) Inventor: HASEGAWA, Hideo, Aichi-ken, 471-8571 (JP); OKA, Naoya, Aichi-ken, 471-8571 (JP); HAYASHI, Takashi, Aichi-ken, 471-8571 (JP)
(74) Representative: J A Kemp LLP

(56) References cited:
- JP-A- 2006 107 013
- JP-A- 2017 208 675

## Description

### BACKGROUND OF THE INVENTION

### 1. Field of the Invention

The present invention relates to a vehicle, a communication control method for the vehicle, an in-vehicle communication device, a communication control method for the in-vehicle communication device, a server apparatus, a communication control method for the server apparatus, and a non-transitory storage medium storing a program.

### 2. Description of Related Art

A terminal device that forms an autonomous distributed network and communicates with another device, and then communicates with a base station via the another device when communication with the base station is impossible is known (for example, Japanese Unexamined Patent Application Publication No. 2017-208675 (JP 2017-208675 A)). JP2006107013A discloses an emergency information collection system for quickly and automatically fetching only proper emergency information affecting the traveling of its own vehicle based on the fact that an emergency vehicle is traveling in the periphery.

### SUMMARY OF THE INVENTION

Cases exist in which energy facilities, water supply facilities, or the like, experience a shortage of electric power, or communication facilities or the like experience a shortage of communication lines due to the occurrence of abnormal situations such as natural disasters or accidents. Here, when communication with the base station is performed via the another device as described in JP 2017-208675 A, the electric power or the communication lines required for such fundamental facilities may be under pressure depending on the number of devices that form the autonomous distributed network.

The present invention provides a technology that can reduce pressure on at least one of communication lines and power consumption when an abnormal situation occurs.

A vehicle comprising an in-vehicle communication device according the present invention is defined in the claims.

An aspect of the invention provides a communication control method for a vehicle as defined in the claims.

An aspect of the present invention is a non-transitory storage medium storing a program. The program is executable by a vehicle communication device and is defined in the claims.

With each aspect of the present invention, it is possible to reduce pressure on at least one of communication lines and power consumption when an abnormal situation occurs.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is an overall view of an information processing system according to one embodiment of the present invention;
FIG. 2A is a functional block of a vehicle according to the present embodiment;
FIG. 2B is a functional block of a server apparatus according to the present embodiment;
FIG. 3 is a table illustrating an example of a communication condition; and
FIG. 4 is a sequence diagram of a process performed by the information processing system according to the present embodiment.

### DETAILED DESCRIPTION OF EMBODIMENTS

Hereinafter, an embodiment of the present invention will be described with reference to the drawings.

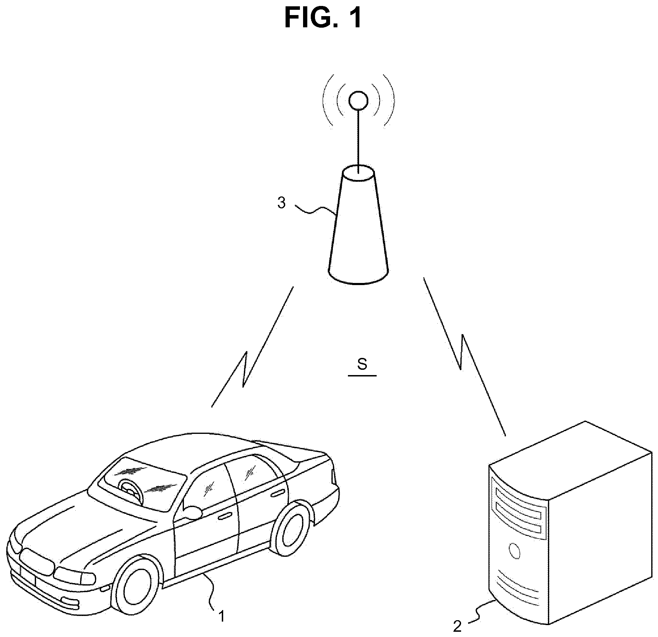

FIG. 1 is an overall view of an information processing system S of the present embodiment. The information processing system S includes a vehicle 1, a server apparatus 2, and a wireless base station 3. The vehicle 1 is, for example, an automobile, but is not limited thereto and may be any vehicle. In the present embodiment, as an example, the vehicle 1 will be described as a vehicle located in Japan. The server apparatus 2 according to the present embodiment transmits an abnormal situation notification to a predetermined vehicle 1. Examples of the abnormal situation notification may include a request for conserving electric power (for example, a request for saving electric power) transmitted by an electric power company or an emergency warning transmitted by the Japanese government, but are not limited thereto. Examples of the emergency warning may include an emergency earthquake warning transmitted by the Japan Meteorological Agency, or emergency information transmitted by the Japanese Cabinet Secretariat using a national early warning system (J-ALERT). Further, when the vehicle 1 is located in a country other than Japan, the abnormal situation notification may appropriately include various warnings transmitted by the government, a public organization, or the like in the country in which the vehicle 1 is located.

In FIG. 1, one vehicle 1, one server apparatus 2 and one wireless base station 3 are illustrated for convenience of description. However, the information processing system S may include one or more vehicles 1, server apparatuses 2, and wireless base stations 3. For example, the wireless base station 3 may include a plurality of wireless base stations connected to one another in a wired manner. The vehicle 1 and the wireless base station 3 are configured to communicate with each other via a wireless network including, for example, a mobile communication network and the Internet. The server apparatus 2 and the wireless base station 3 are configured to communicate with each other via a network in a wired or wireless manner. As such, the vehicle 1 is configured to communicate with the server apparatus 2 via the wireless base station 3.

First, an overview of a process performed by the information processing system S according to the present embodiment will be described. When detecting the occurrence of an abnormal situation, the server apparatus 2 transmits the abnormal situation notification to the vehicle 1 via the wireless base station 3. The vehicle 1 reads a communication condition in the received abnormal situation notification, and, based on the communication condition, restricts at least a part of data communication with the wireless base station 3.

According to the present embodiment as described above, since the vehicle 1 restricts the at least a part of the data communication with the wireless base station 3 when an abnormal situation occurs, it is possible to reduce pressure on at least one of communication lines and power consumption of fundamental facilities or the like.

An internal configuration of each of the vehicle 1 and the server apparatus 2 will be described in detail.

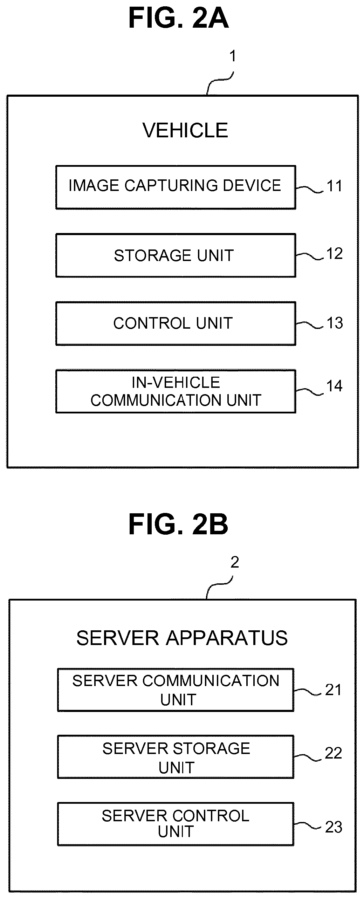

As illustrated in FIG. 2A, the vehicle 1 includes an image capturing device 11, a storage unit 12, a control unit 13, and an in-vehicle communication device 14.

The image capturing device 11 includes a so-called in-vehicle camera, and captures an image of the outside (for example, front, side, rear, and the like) of the vehicle 1. The image capturing device 11 may generate a continuous image of the outside of the vehicle 1 while the vehicle 1 is traveling or is stopped, and record the generated image in the storage unit 12. As an alternative example, any communication terminal such as a smartphone may function as the image capturing device 11.

The storage unit 12 is a device that records and stores various types of information, and includes one or more memories. The "memory" is, for example, a semiconductor memory, a magnetic memory, or an optic memory, but is not limited thereto. Each memory included in the storage unit 12 may function as, for example, a primary storage device, a secondary storage device, or a cache memory. The storage unit 12 stores any information associated with an operation of the vehicle 1. The storage unit 12 may store a result of analyzing and processing the information by the control unit 13. The storage unit 12 may store various types of information on an operation or control of the vehicle 1, such as a program for controlling a subject vehicle.

The control unit 13 includes one or more processors. The "processor" may be a general-purpose processor, or a processor dedicated to a specific process. For example, an electronic control unit (ECU) mounted on the vehicle 1 may function as the control unit 13. The control unit 13 controls the overall operation of the vehicle 1. For example, the control unit 13 controls the image capturing device 11, the storage unit 12, and the in-vehicle communication device 14, simultaneously with performing the entire control on the traveling and operation of the vehicle 1.

The in-vehicle communication device 14 includes a communication module that performs communication between the vehicle 1 and the server apparatus 2. The in-vehicle communication device 14 may include a communication module that performs vehicle-to-vehicle communication between the vehicle 1 and another vehicle without passing through the server apparatus 2, as needed. The in-vehicle communication device 14 may include a communication module connected to the network or a communication module corresponding to a mobile communication standard, such as Fourth Generation (4G) or Fifth Generation (5G) mobile communication. For example, a data communication module (DCM), or the like, mounted on the vehicle 1 may function as the in-vehicle communication device 14.

As illustrated in FIG. 2B, the server apparatus 2 includes a server communication unit 21, a server storage unit 22, and a server control unit 23.

The server communication unit 21 includes a communication module that performs communication between the server apparatus 2 and the vehicle 1, or between the server apparatus 2 and a client. The server communication unit 21 may include a communication module connected to the network. The server communication unit 21 can receive information transmitted from the vehicle 1, simultaneously with transmitting information or an instruction to the vehicle 1.

The server storage unit 22 is a device that records and stores various information, and includes one or more memories. The "memory" is, for example, a semiconductor memory, a magnetic memory, or an optic memory, but is not limited thereto. Each memory included in the server storage unit 22 may function as, for example, a primary storage device, a secondary storage device, or a cache memory. The server storage unit 22 stores, for example, information transmitted from the vehicle 1. The server storage unit 22 may store various programs associated with the overall operation and control of the server control program or the information processing system S.

The server control unit 23 includes one or more processors. The "processor" may be a general-purpose processor, or a processor dedicated to a specific process. The server control unit 23 controls the server communication unit 21 and the server storage unit 22, simultaneously with performing the entire control on the overall operation of the server apparatus 2 and the information processing system S.

The wireless base station 3 includes an antenna and a communication device for transmitting and receiving radio waves of the mobile communication terminal. The wireless base station 3 according to the present embodiment communicates with the vehicle 1 within a cell, and transmits and receives any information such as an abnormal situation notification. When the vehicle 1 moves out of the cell, the wireless base station 3 can execute a handover and transfer the communication with the vehicle 1 to another wireless base station 3.

Hereinafter, a process performed by the vehicle 1 and the server apparatus 2 will be described in detail. The server apparatus 2 detects the occurrence of an abnormal situation. The server apparatus 2 may automatically determine that an abnormal situation has occurred based on information acquired via the network, or upon receiving a predetermined operation by an operator who recognizes the occurrence of the abnormal situation.

The server apparatus 2 may determine the communication condition depending on the abnormal situation that has occurred. For example, upon detecting an earthquake that has occurred in an area near Prefecture A, the server apparatus 2 may determine a communication condition indicating that the data communication is permitted only from 22:00 to 5:00 the next day in order to reduce daytime power consumption in Prefecture A. The communication condition may be determined automatically or according to the operation by the operator. A configuration of the communication condition will be described below in detail.

The server apparatus 2 transmits, to the vehicle 1, an abnormal situation notification including the communication condition. Upon receiving the abnormal situation notification, the wireless base station 3 transmits the abnormal situation notification to the vehicle 1 within the cell.

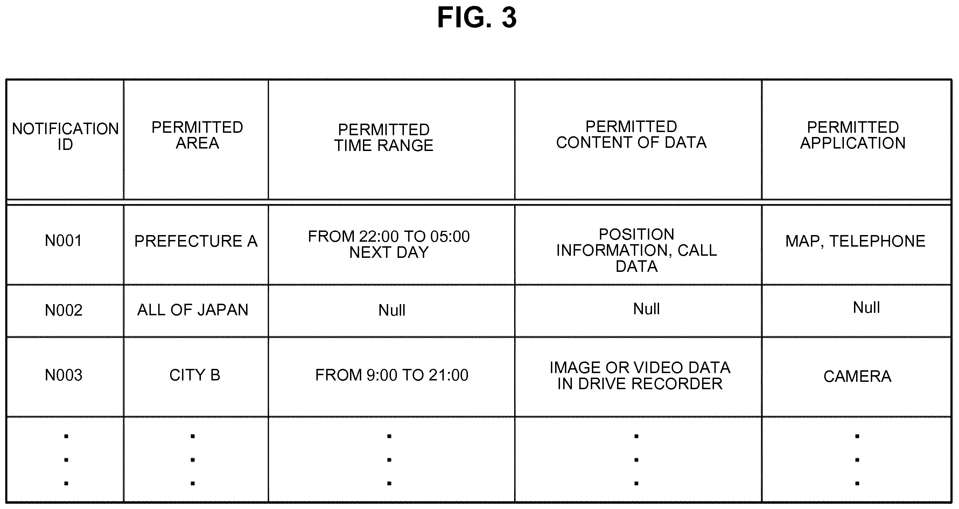

Upon receiving the abnormal situation notification, the vehicle 1 reads the communication condition included in the abnormal situation notification. The abnormal situation notification may include one or more communication conditions. As exemplified in FIG. 3, the communication condition may include, but is not limited to, at least one of an area in which data transmission is permitted (corresponding to "permitted area" in FIG. 3), a time range in which the data transmission is permitted (corresponding to "permitted time range" in FIG. 3), the content of data for which the data transmission is permitted (corresponding to "permitted content of data" in FIG. 3), and an application permitted to be used in the data transmission (corresponding to "permitted application" in FIG. 3). As such, the communication condition of the present embodiment is described in the form of a whitelist that designates a condition under which the data communication is permitted. However, as an alternative example, the communication condition may be described in the form of a blacklist that designates a condition under which the data communication is prohibited.

For example, when reading a communication condition included in an abnormal situation notification N001, the vehicle 1 determines whether the vehicle 1 is in Prefecture A, and whether the current time is included in a time range from 22:00 to 5:00 the next day. When the vehicle 1 is in Prefecture A and the current time is included in a time range from 22:00 to 5:00 the next day, the vehicle 1 reads, in the communication condition, the content of data for which the data transmission is permitted. In the case of the abnormal situation notification N001, the data transmission of location information and call data is permitted. Therefore, the vehicle 1 can transmit its location information to the wireless base station 3 and run a map application. With this configuration, a driver of the vehicle 1 can know his or her location. In addition, the vehicle 1 can communicate call data with the wireless base station 3 using a telephone application. With this configuration, the driver of the vehicle 1 can make an emergency call or make a call with another driver.

However, in the case of the abnormal situation notification N001, transmission of data other than the location information and the call data is not permitted. Therefore, the vehicle 1 does not transmit, for example, image or video data in a drive recorder to the wireless base station 3. As such, the vehicle 1 reduces the frequency of the data transmission to the wireless base station 3 based on the communication condition, and restricts at least a part of the data communication.

The vehicle 1 can temporarily store and accumulate in the storage unit 12, data for which communication is restricted. When the restriction of the data communication is released as described below, the vehicle 1 transmits the data temporarily stored in the storage unit 12 to the wireless base station 3 and resumes communication.

As described above, in the case of the abnormal situation notification N001, transmission of data other than the location information and the call data is not permitted. Therefore, the vehicle 1 does not transmit, for example, chat data to the wireless base station 3. As such, the vehicle 1 reduces the frequency of data transmission to the wireless base station 3 and restricts at least a part of data communication.

In the case of an abnormal situation notification N002, there is no time range in which transmission is permitted in all of Japan. Thus, the vehicle 1 stops the data transmission to the wireless base station 3. On the other hand, the vehicle 1 performs data reception from the wireless base station 3. As such, the vehicle 1 restricts at least a part of the data communication with the wireless base station 3.

In the case of an abnormal situation notification N003, transmission of image or video data in the drive recorder is permitted in the time range from 9:00 to 21:00 in City B. Therefore, when the vehicle 1 is in City B and the current time is included in the time range from 9:00 to 21:00, the vehicle 1 generates image or video data in the drive recorder using a camera application, and transmits the generated image or video data to the wireless base station 3. As such, the vehicle 1 restricts at least a part of the data communication with the wireless base station 3 by stopping transmission of data other than such image or video data.

When the vehicle 1 restricts at least a part of the data communication as described above, the vehicle 1 may search for an alternative to the restricted data communication, and, when an alternative is detected, may use it. For example, when restricting the data communication by receiving a so-called Internet radio signal, the vehicle 1 may receive an AM radio signal or an FM radio signal with analog modulation, as an alternative. As another example, when restricting the data communication by receiving a so-called Internet TV signal, the vehicle 1 may receive a digital terrestrial television signal as an alternative. The alternative may be any tool that can reduce the amount of the data communication with the wireless base station 3.

When the powered off ignition power source or the powered off auxiliary power source is detected, the vehicle 1 may further restrict at least a part of the data communication with the wireless base station 3 regardless of what the communication condition is. For example, the vehicle 1 may stop all the data transmission to the wireless base station 3, and only receive data from the wireless base station 3.

The vehicle 1 may indicate, on the screen of a navigation system or a head-up display of the vehicle 1, that at least a part of the data communication is restricted. For example, the vehicle 1 may display the content of restricted data, available applications, and the like. Here, the vehicle 1 can display the content in a summary or in a shortened text to prevent driver distraction.

As an example of receiving the abnormal situation notification N001, the vehicle 1 may repeatedly determine whether it is in Prefecture A, and whether the current time is included in the time range from 22:00 to 5:00 the next day. As such, when it is determined that the vehicle 1 exits Prefecture A by traveling on the road, or that the current time has passed 5:00 the next day, the vehicle 1 can transmit, to the wireless base station 3, information other than the location information and the call data.

The vehicle 1 may receive a new abnormal situation notification from the server apparatus 2. Here, the vehicle 1 restricts at least a part of the data communication based on the communication condition included in the received abnormal situation notification.

The vehicle 1 can receive, via the wireless base station 3, an instruction to discard the communication condition from the server apparatus 2. Upon receiving the instruction to discard from the server apparatus 2, the vehicle 1 releases the restriction on the data communication. As such, the data communication between the vehicle 1 and the wireless base station 3 returns to the state before the restriction. The vehicle 1 transmits the data temporarily stored in the storage unit 12 to the wireless base station 3, and resumes normal communication with the wireless base station 3.

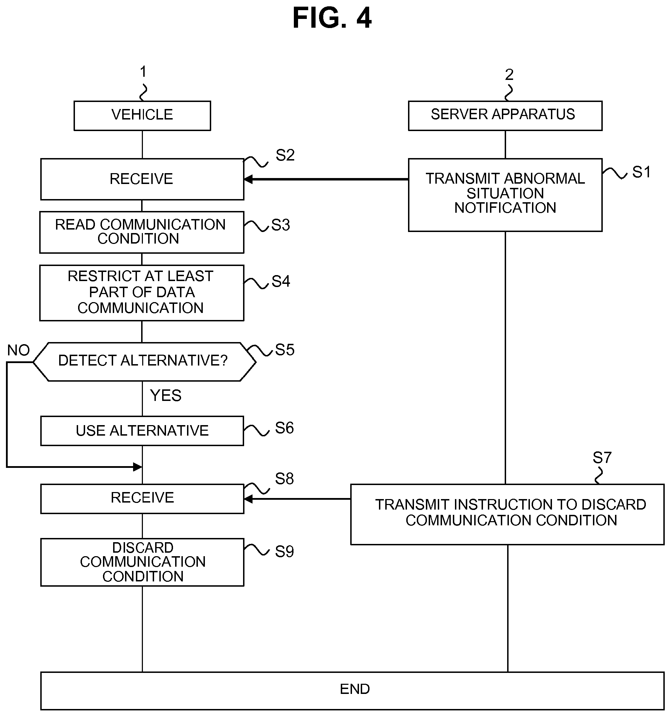

FIG. 4 illustrates a sequence diagram of an operation performed at any time by the information processing system S according to the present embodiment.

Step S1: Upon detecting an abnormal situation, the server apparatus 2 transmits an abnormal situation notification to the vehicle 1.

Step S2: The vehicle 1 receives the abnormal situation notification from the server apparatus 2.

Step S3: The vehicle 1 reads the communication condition in the abnormal situation notification.

Step S4: The vehicle 1 restricts at least a part of the data communication based on the communication condition. Since the method of restriction has been described above, the description is omitted here.

Step S5: The vehicle 1 searches for an alternative to the restricted data communication.

Step S6: Upon detecting an alternative (Yes in step S5), the vehicle 1 uses the alternative.

Step S7: Upon receiving an instruction to transmit an instruction to discard the communication condition, the server apparatus 2 transmits the instruction to discard the communication condition to the vehicle 1.

Step S8: The vehicle 1 receives the instruction to discard the communication condition from the server apparatus 2.

Step S9: The vehicle 1 discards the communication condition according to the instruction.

As described above, according to the present embodiment, when the abnormal situation notification is received from the wireless base station 3, the control unit 13 restricts at least a part of the data communication with the wireless base station 3 based on the communication condition included in the abnormal situation notification. With this configuration, the information processing system S can, when an abnormal situation occurs, reduce pressure on at least one of communication lines and power consumption required for the fundamental facilities or the like, which is caused by communication between the vehicle 1 and the wireless base station 3.

Further, according to the present embodiment, the communication condition includes at least one of the content of data for which the data transmission is permitted, a time range in which the data transmission is permitted, an area in which the data transmission is permitted, and an application permitted to be used in the data transmission. With this configuration, the information processing system S can closely control the communication between the vehicle 1 and the wireless base station 3. Therefore, it is possible to flexibly change the restricted amount of the data communication depending on a shortage of at least one of communication lines and power consumption, for example, for each time range or area.

Further, according to the present embodiment, the restricted data includes an image captured by the image capturing device 11 provided in the vehicle 1. With this configuration, since the information processing system S restricts the communication of the image data, for example, in a situation in which the communication of data other than the image data needs to be prioritized, it is possible to reduce pressure on at least one of communication lines and power consumption.

Moreover, according to the present embodiment, when at least a part of the data communication is restricted, the control unit 13 searches for an alternative to the restricted data communication, and, when an alternative is detected, uses it. With this configuration, even though the data communication is restricted, the information processing system S detects and uses an alternative, such that convenience for a user can be improved.

In addition, according to the present embodiment, upon receiving, from the wireless base station 3, an instruction to discard the communication condition, the control unit 13 releases the restriction on the data communication. With this configuration, when the restriction on the data communication is unnecessary, the information processing system S can return the data communication to the original state, such that convenience for the user can be restored.

Further, according to the present embodiment, when the powered off ignition power source or the powered off auxiliary power source is detected, the control unit 13 further restricts at least a part of the data communication. With this configuration, when the data communication with the wireless base station 3 is being performed even though various power sources of the vehicle 1 are off, the vehicle 1 can restrict at least a part of the data communication (for example, stopping transmission). Therefore, the vehicle 1 can reduce pressure on at least one of communication lines and power consumption required for the fundamental facilities or the like. In addition, electric power of the vehicle 1 can be further conserved.

The scope of the present invention is defined by the claims. The present invention has been described as above with reference to the drawings and the embodiment. However, it is to be noted that a person skilled in the art can easily make variations and modifications thereto, based on the present disclosure. For example, functions and the like included in each element, each step, or the like can be rearranged so as not to be logically contradictory, and a plurality of elements, steps, or the like may be combined into one or divided.

For example, in the above embodiment, the communication condition is included in the abnormal situation notification. However, in another embodiment, the communication condition does not need to be included in the abnormal situation notification, and may be stored in the storage unit 12 in advance. In such a case, upon receiving the abnormal situation notification from the server apparatus 2, the vehicle 1 reads, from the storage unit 12, the communication condition associated with the abnormal situation notification (for example, corresponding to the abnormal situation notification). Then the vehicle 1 voluntarily restricts at least a part of the data communication based on the read communication condition. Alternatively, the communication condition does not need to be included in the abnormal situation notification, and a separate notification including the communication condition may be transmitted to the vehicle 1 after the transmission of the abnormal situation notification.

Further, in the above embodiment, upon receiving an abnormal situation notification from the server apparatus 2, the wireless base station 3 transmits the received abnormal situation notification to the vehicle 1. However, in another embodiment, after receiving the abnormal situation notification, the wireless base station 3 determines the state of the communication lines and the electric power. When the wireless base station 3 determines that the communication lines or the electric power falls short, the wireless base station 3 may transmit the abnormal situation notification to the vehicle 1. As such, the information processing system S may be configured to transmit the abnormal situation notification to the vehicle 1 in response to a request from the wireless base station 3. In yet another embodiment, the server apparatus 2 may determine whether to transmit the abnormal situation notification depending on the type of vehicle.

In addition, in the above embodiment, the communication condition includes at least one of an area in which the data transmission is permitted, a time range in which data transmission is permitted, the content of data for which the data transmission is permitted, and an application permitted to be used in the data transmission. However, in another embodiment, the communication condition may additionally or alternatively include a reference value for the amount of the data communication between the vehicle 1 and the wireless base station 3. The reference value is, for example, 10 gigabytes, but not limited thereto. When determining that the amount of the data communication with the wireless base station 3 within a predetermined period has reached the reference value, the vehicle 1 may reduce the speed of the data communication with the wireless base station 3 to a predetermined value. The predetermined value may be, for example, 200 kilobits per second. Alternatively, when determining that the amount of the data communication with the wireless base station 3 has reached the reference value, the vehicle 1 may restrict at least a part of the data communication in the manner described in the above embodiment.

Moreover, it is possible to make a configuration in which each of any vehicle or any server apparatus functions as a vehicle 1 or a server apparatus 2 according to the above embodiment. Specifically, a program that describes processing details for implementing each function of the vehicle 1 or the server apparatus 2 according to the above embodiment is stored in a memory of the any vehicle or the any server apparatus, and read and executed by a processor of the any vehicle or the any server apparatus. Therefore, the invention according to the present embodiment can also be implemented as a program executable by a processor. The aforementioned embodiments are meant to be examples useful for understanding the invention. The present invention is only defined by the appended claims.

## Claims

1. A vehicle (1) comprising:
an in-vehicle communication device (14) configured to communicate with a server apparatus (2) via a wireless base station (3); and
a control unit (13) configured to, when the in-vehicle communication device (14) receives an abnormal situation notification from the wireless base station (3), restrict at least a part of data communication with the wireless base station (3) based on a communication condition included in the received abnormal situation notification and associated with the abnormal situation,
wherein restricting the at least a part of the data communication with the wireless base station (3) includes at least one of transmitting data at a reduced frequency to the wireless base station (3), stopping the data transmission to the wireless base station (3), and reducing speed of the data communication to a predetermined value when it is determined that an amount of the data communication with the wireless base station (3) within a predetermined period has reached a reference value, and
wherein the communication condition includes a condition on content of data for which data transmission is permitted, and an application permitted to be used in the data transmission.

2. The vehicle (1) according to claim 1, wherein at least one of: the abnormal situation notification includes at least one of a request for conserving electric power and an emergency warning; and the restricted data communication includes data communication of an image captured by an image capturing device (11) provided in the vehicle (1).

3. The vehicle (1) according to claim 1, wherein the in-vehicle communication device (1) is configured to receive, from the server apparatus (2), one of: data including the communication condition together with the abnormal situation notification; and data including the communication condition separately from the abnormal situation notification.

4. The vehicle (1) according to any of claims 1-3, wherein the control unit (13) is configured to at least one of: when the at least a part of the data communication is restricted, search for an alternative to the restricted data communication, and when the alternative is detected, use the alternative; when the in-vehicle communication device (14) receives an instruction to discard the communication condition from the wireless base station (3), release a restriction on the data communication; and when a powered off ignition power source or a powered off auxiliary power source is detected, further restrict at least another part of the data communication.

5. A communication control method for a vehicle (1) configured to communicate, by an in-vehicle communication device (14), with a server apparatus (2) via a wireless base station (3), the method comprising:
restricting, when receiving an abnormal situation notification from the server apparatus (2), via the wireless base station (3), at least a part of data communication with the wireless base station (3) based on a communication condition included in the received abnormal situation notification and associated with the abnormal situation,
wherein restricting the at least a part of the data communication with the wireless base station (3) includes at least one of transmitting data at a reduced frequency to the wireless base station (3), stopping the data transmission to the wireless base station (3), and reducing speed of the data communication to a predetermined value when it is determined that an amount of the data communication with the wireless base station (3) within a predetermined period has reached a reference value, and
wherein the communication condition includes a condition on content of data for which data transmission is permitted, and an application permitted to be used in the data transmission.

6. A non-transitory storage medium comprising instructions which, when executed by a vehicle (1), cause the vehicle to perform the method of claim 5.

7. A computer program comprising instructions which, when executed by a vehicle (1), cause the vehicle to perform the method of claim 5.

## Patentansprüche

1. Fahrzeug (1), umfassend:
eine bordeigene Kommunikationsvorrichtung (14), die dazu konfiguriert ist, mit einer Servereinrichtung (2) über eine drahtlose Basisstation (3) zu kommunizieren; und
eine Steuereinheit (13), die dazu konfiguriert ist, wenn die bordeigene Kommunikationsvorrichtung (14) eine Benachrichtigung über eine abnormale Situation von der drahtlosen Basisstation (3) empfängt, wenigstens einen Teil der Datenkommunikation mit der drahtlosen Basisstation (3) auf Grundlage einer Kommunikationsbedingung, die in der empfangenen Benachrichtigung über eine abnormale Situation enthalten ist und der abnormalen Situation zugeordnet ist, einzuschränken,
wobei das Einschränken des wenigstens einen Teils der Datenkommunikation mit der drahtlosen Basisstation (3) wenigstens eines von Übertragen von Daten mit einer reduzierten Frequenz an die drahtlose Basisstation (3), Stoppen der Datenübertragung an die drahtlose Basisstation (3) und Reduzieren der Geschwindigkeit der Datenkommunikation auf einen vorbestimmten Wert beinhaltet, wenn bestimmt wird, dass eine Menge der Datenkommunikation mit der drahtlosen Basisstation (3) innerhalb eines vorbestimmten Zeitraums einen Referenzwert erreicht hat, und
wobei die Kommunikationsbedingung eine Bedingung bezüglich des Inhalts von Daten, für die die Datenübertragung erlaubt ist, und eine Anwendung beinhaltet, die bei der Datenübertragung verwendet werden darf.

2. Fahrzeug (1) nach Anspruch 1, wobei wenigstens eines von: die Benachrichtigung über eine abnormale Situation beinhaltet wenigstens eines einer Aufforderung zum Sparen elektrischer Leistung und einer Notfallwarnung; und die eingeschränkte Datenkommunikation beinhaltet eine Datenkommunikation eines Bildes, das von einer in dem Fahrzeug (1) bereitgestellten Bildaufnahmevorrichtung (11) aufgenommen wird.

3. Fahrzeug (1) nach Anspruch 1, wobei die bordeigene Kommunikationsvorrichtung (1) dazu konfiguriert ist, von der Servereinrichtung (2) eines zu empfangen von: Daten, die die Kommunikationsbedingung zusammen mit der Benachrichtigung über die abnormale Situation beinhalten; und Daten, die die Kommunikationsbedingung getrennt von der Beachrichtung über die abnormale Situation beinhalten.

4. Fahrzeug (1) nach einem der Ansprüche 1-3, wobei die Steuereinheit (13) zu wenigstens einem konfiguriert ist, von: wenn wenigstens ein Teil der Datenkommunikation eingeschränkt ist, Suchen nach einer Alternative für die eingeschränkte Datenkommunikation, und wenn die Alternative erkannt wird, Verwenden der Alternative; wenn die bordeigene Kommunikationsvorrichtung (14) eine Anweisung zum Verwerfen der Kommunikationsbedingung von der drahtlosen Basisstation (3) empfängt, Freigeben einer Einschränkung der Datenkommunikation; und wenn eine ausgeschaltete Zündungsleistungsquelle oder eine ausgeschaltete Hilfsleistungsquelle erkannt wird, weiteres Einschränken wenigstens eines anderen Teils der Datenkommunikation.

5. Verfahren für die Kommunikationssteuerung für ein Fahrzeug (1), das dazu konfiguriert ist, durch eine bordeigene Kommunikationsvorrichtung (14) mit einer Servereinrichtung (2) über eine drahtlose Basisstation (3) zu kommunizieren, wobei das Verfahren umfasst:
Einschränken, wenn eine Benachrichtigung über eine abnormale Situation von der Servervorrichtung (2), über die drahtlose Basisstation (3) empfangen wird, wenigstens eines Teils der Datenkommunikation mit der drahtlosen Basisstation (3) auf Grundlage einer Kommunikationsbedingung, die in der empfangenen Benachrichtigung über eine abnormale Situation enthalten ist und der abnormalen Situation zugeordnet ist,
wobei das Einschränken des wenigstens einen Teils der Datenkommunikation mit der drahtlosen Basisstation (3) wenigstens eines von Übertragen von Daten mit einer reduzierten Frequenz an die drahtlose Basisstation (3), Stoppen der Datenübertragung an die drahtlose Basisstation (3) und Reduzieren der Geschwindigkeit der Datenkommunikation auf einen vorbestimmten Wert beinhaltet, wenn bestimmt wird, dass eine Menge der Datenkommunikation mit der drahtlosen Basisstation (3) innerhalb eines vorbestimmten Zeitraums einen Referenzwert erreicht hat, und
wobei die Kommunikationsbedingung eine Bedingung bezüglich des Inhalts von Daten, für die die Datenübertragung erlaubt ist, und eine Anwendung beinhaltet, die bei der Datenübertragung verwendet werden darf.

6. Nichtflüchtiges Speichermedium, das Anweisungen umfasst, die, wenn sie von einem Fahrzeug (1) ausgeführt werden, das Fahrzeug veranlassen, das Verfahren nach Anspruch 5 durchzuführen.

7. Computerprogramm, das Anweisungen umfasst, die, wenn sie von einem Fahrzeug (1) ausgeführt werden, das Fahrzeug veranlassen, das Verfahren nach Anspruch 5 durchzuführen.

## Revendications

1. Véhicule (1) comprenant :
un dispositif de communication embarqué (14) conçu pour communiquer avec un appareil serveur (2) par l'intermédiaire d'une station de base sans fil (3), et
une unité de commande (13) conçue pour, lorsque le dispositif de communication embarqué (14) reçoit un avertissement de situation anormale provenant de la station de base sans fil (3), restreindre au moins une partie de la communication de données avec la station de base sans fil (3) en fonction d'une condition de communication incluse dans l'avertissement de situation anormale reçu et associée à la situation anormale ;
la restriction de ladite au moins une partie de la communication de données avec la station de base sans fil (3) comprenant une transmission de données à une fréquence réduite à la station de base sans fil (3), un arrêt de la transmission de données à la station de base sans fil (3) et/ou une réduction du débit de communication de données à une valeur prédéterminée lorsqu'il est déterminé qu'une quantité de communication de données avec la station de base sans fil (3) au cours d'une période prédéterminée a atteint une valeur de référence, et
la condition de communication comprenant une condition portant sur le contenu des données pour lesquelles une transmission de données est autorisée, et une application dont l'utilisation est autorisée lors de la transmission de données.

2. Véhicule (1) selon la revendication 1, dans lequel l'avertissement de situation anormale comprend au moins une demande visant à préserver l'énergie électrique et/ou un avertissement d'urgence ; et/ou la communication de données restreinte comprend une communication de données concernant une image prise par un dispositif de prise d'images (11) prévu dans le véhicule (1).

3. Véhicule (1) selon la revendication 1, dans lequel le dispositif de communication embarqué (1) est conçu pour recevoir, en provenance de l'appareil serveur (2) : des données comprenant la condition de communication en même temps que l'avertissement de situation anormale, ou des données comprenant la condition de communication séparément de l'avertissement de situation anormale.

4. Véhicule (1) selon l'une quelconque des revendications 1 à 3, dans lequel l'unité de commande (13) est conçue pour effectuer au moins une action parmi : lorsque ladite au moins une partie de la communication de données est restreinte, rechercher une solution de remplacement à la communication de données restreinte, et lorsque la solution de remplacement est détectée, utiliser ladite solution de remplacement ; lorsque le dispositif de communication embarqué (14) reçoit une instruction de rejeter la condition de communication provenant de la station de base sans fil (3), lever la restriction portant sur la communication de données ; et lorsqu'une source d'énergie d'allumage éteinte ou une source d'énergie auxiliaire éteinte est détectée, restreindre davantage au moins une autre partie de la communication de données.

5. Procédé de commande de communication propre à un véhicule (1) conçu pour communiquer, au moyen d'un dispositif de communication embarqué (14), avec un appareil serveur (2) par l'intermédiaire d'une station de base sans fil (3), le procédé comprenant :
la restriction, lors de la réception d'un avertissement de situation anormale provenant de l'appareil serveur (2), par l'intermédiaire de la station de base sans fil (3), d'au moins une partie de la communication de données avec la station de base sans fil (3), en fonction d'une condition de communication incluse dans l'avertissement de situation anormale reçu et associée à la situation anormale ;
la restriction de ladite au moins une partie de la communication de données avec la station de base sans fil (3) comprenant une transmission de données à une fréquence réduite à la station de base sans fil (3), un arrêt de la transmission de données à la station de base sans fil (3) et/ou une réduction du débit de communication de données à une valeur prédéterminée lorsqu'il est déterminé qu'une quantité de communication de données avec la station de base sans fil (3) au cours d'une période prédéterminée a atteint une valeur de référence, et
la condition de communication comprenant une condition portant sur le contenu des données pour lesquelles une transmission de données est autorisée, et une application dont l'utilisation est autorisée lors de la transmission de données.

6. Support de stockage non transitoire comprenant des instructions qui, lorsqu'elles sont exécutées par un véhicule (1), amènent le véhicule à réaliser le procédé selon la revendication 5.

7. Programme informatique comprenant des instructions qui, lorsqu'elles sont exécutées par un véhicule (1), amènent le véhicule à réaliser le procédé selon la revendication 5.
